# EUROPÄISCHE PATENTSCHRIFT

(11) **EP 2 405 169 B1**
(45) Veröffentlichungstag und Bekanntmachung des Hinweises auf die Patenterteilung: **09.01.2013**
(21) Anmeldenummer: 11005279.2
(22) Anmeldetag: 28.06.2011
(51) Int. Cl.: F16L 3/10, F16L 3/223

(54) **Bauteil für einen Befestigungsclip und Befestigungsclip**
Component for a fixing clip and fixing clip
Composant pour un clip de fixation et clip de fixation

(30) Priorität: 09.07.2010 FR 1055612
(43) Veröffentlichungstag der Anmeldung: 11.01.2012
(73) Patentinhaber: TRW Automotive Electronics & Components GmbH, 78315 Radolfzell (DE)
(72) Erfinder: Allenbach, Estelle, 67350 Niedermodern (FR); Kuhm, Michel, 67340 Ingwiller (FR)
(74) Vertreter: Prinz & Partner

(56) Entgegenhaltungen:
- US-A- 5 029 782
- US-A1- 2006 108 481

## Beschreibung

Die Erfindung betrifft ein Bauteil für einen Befestigungsclip, der aus zwei identischen solcher Bauteile zusammengesetzt ist und zur Befestigung von zumindest einer Leitung dient, sowie einen solchen Befestigungsclip.

Befestigungsclip werden in verschiedenen Bereichen eingesetzt, um Leitungen, beispielsweise Kabel oder Schläuche, zu sichern bzw. zu befestigen. Der Befestigungsclip umschließt die Leitung vorzugsweise in Umfangsrichtung, so dass diese nicht aus dem Befestigungsclip rutschen kann. Um die Befestigung der Leitungen zu erleichtert, sind die Befestigungsclips beispielsweise mehrteilig ausgebildet. Ein erstes Bauteil kann beispielsweise an einer Wand vormontiert werden. Anschließend wird die Leitung eingeschoben und das zweite Bauteil am ersten Bauteil befestigt. Aus US-A-5 029 782 ist einen Bauteil, der alle Merkmale des Oberbegriffs des Anspruchs 1 aufweist, bekannt.

Aufgabe der Erfindung ist es, ein Bauteil für einen Befestigungsclip zur Verfügung zu stellen, das eine einfache und schnelle Montage des Befestigungsclips bzw. der Leitung am Befestigungsclip ermöglicht und kostengünstig hergestellt werden kann.

Erfindungsgemäß wird die Aufgabe gelöst durch ein Bauteil für einen Befestigungsclip, der aus zwei identischen solcher Bauteile zusammengesetzt ist und zur Befestigung von zumindest einer Leitung dient. Das Bauteil hat eine Grundplatte und zumindest eine Aufnahme für eine Leitung, wobei die Aufnahme einen im Wesentlichen halbzylindrischen Aufnahmeraum definiert. Die Aufnahme weist bezüglich der Zylinderachse paarweise gegenüberliegende erste und zweite Rastelemente auf, die sich auf einer Seite der Grundplatte von dieser weg erstrecken. Die ersten Rastelemente sind bezüglich einer senkrecht auf der Zylinderachse stehenden Ebene auf einer ersten Seite der Ebene und die zweiten Rastelemente auf der zweiten Seite der Ebene angeordnet. Die ersten Rastelemente sind so ausgebildet, dass diese an den zweiten Rastelementen einrasten können. Das Bauteil ist also so ausgebildet, dass die ersten bzw. die zweiten Rastelemente eines um 180° gedrehten zweiten Bauteil, dessen senkrecht auf der Zylinderachse stehende Ebene deckungsgleich mit der Ebene eines Bauteils ist, in die zweiten bzw. die ersten Rastelemente des ersten Bauteils einrasten können. Die beiden halbzylindrischen Aufnahmeräume bilden in diesem Fall einen zylindrischen Aufnahmeraum, der eine Leitung in Umfangsrichtung vollständig umschließen und so sicher halten kann. Für den Befestigungsclip werden also nur zwei identische Bauteile benötigt, sodass keine verschiedenen Bauteile vorrätig gehalten werden müssen. Durch die symmetrische Ausführung muss lediglich ein Bauteil senkrecht zur Zylinderachse des Aufnahmeraums um 180° gedreht werden und kann auf einem zweiten Bauteil aufgesetzt werden. Durch die geringe Anzahl verschiedener Bauteile können zudem die Herstellungskosten des Befestigungsclips reduziert werden.

Vorzugsweise ist eine spielfreie Lagerung eines ersten Bauteils an dem zweiten Bauteil vorgesehen. Dies wird erreicht, indem die ersten Rastelemente und/oder die zweiten Rastelemente jeweils direkt an die senkrecht auf der Zylinderachse stehenden Ebene angrenzen. In montiertem Zustand der Bauteile liegen die ersten Rastelemente bzw. die zweiten Rastelemente der Bauteile in Richtung der Zylinderachse so jeweils direkt aneinander an, da die senkrecht auf der Zylinderachse stehende Ebene beider Bauteile in einer Ebene liegen. Da die ersten Rastelemente bzw. die zweiten Rastelemente in Richtung der Zylinderachse aneinander anliegen, ist ein Verschieben der Bauteile in Richtung der Zylinderachse ausgeschlossen.

Um das Bauteil für verschieden große Leitungen zu verwenden, ist es denkbar, dass die ersten und/oder die zweiten Rastelemente jeweils mehrere Rastvorsprünge aufweisen, die mit verschiedenen Abständen zur Grundplatte an den Rastelementen angeordnet sind. Die Rastelemente des jeweils anderen Bauteils können an den verschiedenen Rastvorsprüngen einrasten, wodurch ein unterschiedlich großer Abstand der Bauteile zueinander ist bzw. verschieden große Durchmesser des Aufnahmeraums möglich sind. Leitungen mit verschiedenen Durchmessern können so jeweils spielfrei am Befestigungsclip gehalten werden. Es ist sogar denkbar, dass der Befestigungsclip um die Leitung vorgespannt wird, sodass die Leitung in Richtung der Zylinderachse geklemmt ist und nicht verschoben werden kann.

Das Bauteil kann zusätzlich zumindest einen Zentriervorsprung aufweisen, der sich auf der Seite der Rastelemente von der Grundplatte weg erstreckt und der bezüglich der Mittelebene auf nur einer Seite der Ebene angeordnet ist. Diese Zentriervorsprünge können als zusätzliche Zentrierhilfe beim Zusammensetzen der Bauteile dienen. Es ist aber auch denkbar, dass die Zentriervorsprünge beider Bauteile in montiertem Zustand in Richtung der Zylinderachse aneinander anliegen und so ein Verschieben der Bauteile gegeneinander verhindern.

Das Sperren der Bauteile gegeneinander in Richtung der Zylinderachse kann auch ausschließlich über die Zentriervorsprünge erfolgen. An der Grundplatte sind dafür vorzugsweise zumindest zwei Zentriervorsprünge vorgesehen, die sich auf der Seite der Rastelemente von der Grundplatte weg erstrecken und die in unterschiedlichem Abstand zur Zylinderachse am Grundkörper angeordnet sind. Der erste Zentriervorsprung ist auf der ersten Seite der senkrecht auf der Zylinderachse stehenden Ebene und der zweite Zentriervorsprung auf der zweiten Seite der Ebene angeordnet. Die Zentriervorsprünge liegen sich also diagonal gegenüber, sodass bei einem zusammengesetzten Befestigungsclip die ersten Zentriervorsprünge beider Bauteile eine Verschiebung in eine Richtung der Zylinderachse verhindern und die zweiten Zentriervorsprünge eine Bewegung in die entgegengesetzte Richtung.

Um eine spielfreie Sperrung der Bauteile gegeneinander in Richtung der Zylinderachse zu ermöglichen, grenzen die Zentriervorsprünge vorzugsweise direkt an die senkrecht auf der Zylinderachse stehende Ebene. In zusammengesetztem Zustand des Befestigungsclips liegen sowohl die ersten Zentriervorsprünge als auch die zweiten Zentriervorsprünge so in Richtung der Zylinderachse direkt aneinander an, dass die Bauteile des Befestigungsclips spielfrei gehalten sind und ein Verschieben in Richtung der Zylinderachse ausgeschlossen ist.

Die Aufnahme kann beispielsweise eine den Aufnahmeraum begrenzende Kontaktfläche aufweisen, die konkav ausgebildet ist und insbesondere einen kreissegmentförmigen Querschnitt aufweist. Die Aufnahme weist also eine an den Leitungsumfang angepasste Kontaktfläche auf, wodurch eine möglichst große Anlagefläche der Leitung am Bauteil erreicht werden kann.

Die Aufnahme kann beispielsweise auch zum Aufnahmeraum definierende Rippen aufweisen, die insbesondere in Richtung der Zylinderachse verlaufen.

Es ist vorzugsweise vorgesehen, dass das Bauteil zumindest zwei Aufnahmen für jeweils eine Leitung aufweist, wobei sich die Aufnahmen auf der gleichen Seite von der Grundplatte weg erstrecken. Durch eine symmetrische Bauform kann ein solches Bauteil auch für mehrere Aufnahmen verwendet werden. Das Bauteil ist beispielsweise so ausgebildet, dass eine erste Aufnahme eines ersten Bauteils mit der ersten Aufnahme eines zweiten Bauteils verbunden werden kann. Es ist aber denkbar, dass die erste Aufnahme des ersten Bauteils mit der zweiten Aufnahme eines zweiten Bauteils verbunden werden kann. Aufgrund der Symmetrie des Bauteils kann dies sehr flexibel eingesetzt werden, sodass eine schnellere und flexible Montage möglich ist.

Es ist auch möglich, dass die Aufnahmeräume der Aufnahmen unterschiedliche Durchmesser aufweisen. Der Befestigungsclip kann so für Leitungen mit verschiedenem Durchmesser verwendet werden.

Um das Einrasten der ersten Rastelemente an den zweiten Rastelemente zu ermöglichen, sind die Rastvorsprünge der ersten Rastelemente vorzugsweise in Richtung zum Aufnahmeraum gerichtet und die Rastvorsprünge der zweiten Rastelemente vom Aufnahmeraum weg gerichtet.

Das Bauteil kann beispielsweise eine Aussparung aufweisen, die zur Befestigung des Bauteils oder zur Aufnahme eines Werkzeugs zur Montage des Bauteils verwendet werden kann.

Vorzugsweise ist das Bauteil einstückig aus Kunststoff spritzgegossen, wodurch eine kostengünstige Herstellung des Bauteils möglich ist.

Zur Lösung der Aufgabe ist des Weiteren ein Befestigungsclip vorgesehen zur Befestigung von zumindest einer Leitung mit einem im Wesentlichen zylindrischen Aufnahmeraum, wobei der Befestigungsclip zwei Bauteile der vorstehend genannten Art aufweist. Der Aufnahmeraum ist durch die Aufnahmen der Bauteile gebildet. Die ersten Rastelemente des ersten Bauteils sind an den zweiten Rastelementen des zweiten Bauteils verrastet und die zweiten Rastelemente des ersten Bauteils an den ersten Rastelementen des zweiten Bauteils.

Der Befestigungsclip kann beispielsweise auch mehrere Aufnahmeräume aufweisen, wobei die Aufnahmeräume unterschiedliche Durchmesser aufweisen können, sodass der Befestigungsclip unterschiedlich große Leitungen aufnehmen kann.

Die Rastelemente der Bauteile können beispielsweise mehrere Rastvorsprünge aufweisen, sodass durch Einrasten der jeweiligen Rastelemente an verschiedenen Rastvorsprüngen der korrespondierenden Rastelemente der Durchmesser der Aufnahme variiert werden kann. Zum einen kann der Befestigungsclip so für verschiedene Durchmesser verwendet werden, zum anderen kann dadurch eine Vorspannung auf die Leitung erzeugt werden, sodass diese in der Aufnahme geklemmt ist und in Richtung der Zylinderachse nicht relativ zum Befestigungsclip verschoben werden kann.

Weitere Vorteile und Merkmale ergeben sich aus der nachfolgenden Beschreibung in Verbindung mit den beigefügten Zeichnungen. In diesen zeigen:
- Figur 1 ein erfindungsgemäßer Befestigungsclip mit zwei darin gehaltenen Leitungen;
- Figur 2 eine erste Ansicht eines Bauteils des Befestigungsclips aus Figur 1;
- Figur 3 eine perspektivische Ansicht des Bauteils aus Figur 2;
- Figur 4 eine Seitenansicht des Befestigungsclips aus Figur 1 vor der Montage;
- Figur 5 eine perspektivische Ansicht des Befestigungsclips aus Figur 4;
- Figur 6 eine zweite perspektivische Ansicht des Befestigungsclips aus Figur 4;
- Figur 7 eine perspektivische Ansicht des Befestigungsclips aus Figur 1;
- Figur 8 a und b eine erste und eine zweite Detailansicht der Rastelemente der Befestigungsbaugruppe aus Figur 1; und
- Figur 9 eine zweite Ausführungsform eines erfindungsgemäßen Befestigungsclips.

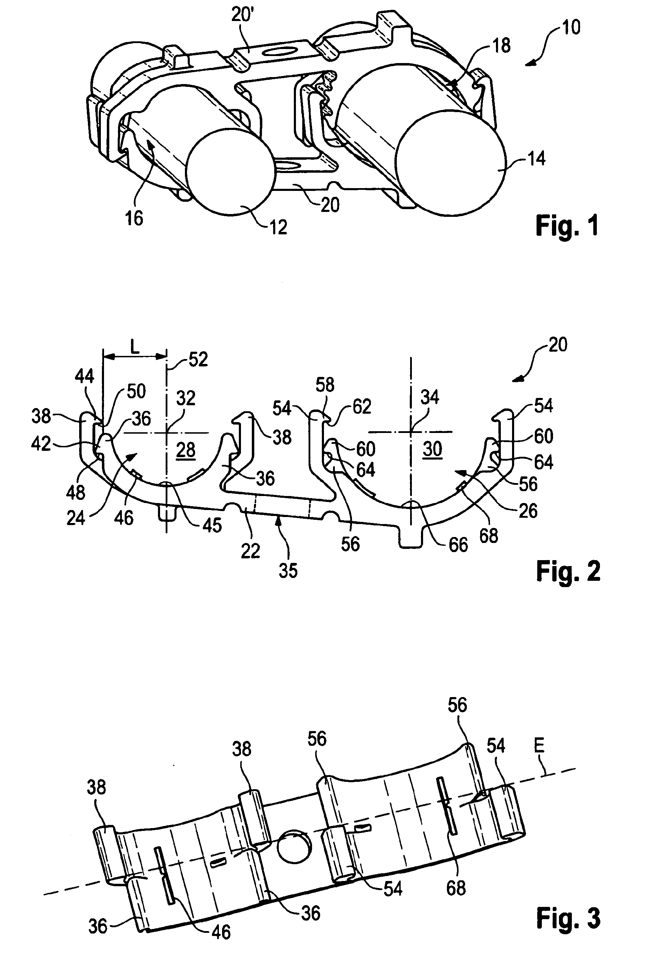

Der in Figur 1 gezeigte Befestigungsclip 10 dient zur Aufnahme und Befestigung von zwei Leitungen 12, 14. Der Befestigungsclip 10 hat für jede der Leitungen 12, 14 jeweils einen Aufnahmeraum 16, 18, der hier zylindrisch ausgebildet ist, sodass die Leitungen 12, 14 in Umfangsrichtung umschlossen und sicher gehalten sind. Der Befestigungsclip 10 besteht hier aus zwei Bauteilen 20, 20', die, wie im Folgenden dargestellt wird, identisch ausgebildet sind.

Der Aufbau der Bauteile 20, 20' ist anhand des Bauteils 20 des Befestigungsclips 10 in den Figuren 2 bis 3 dargestellt. Das Bauteil 20 hat eine Grundplatte 22 und zwei Aufnahmen 24, 26 für jeweils eine Leitung, die sich auf der gleichen Seite der Grundplatte 22 von dieser weg erstrecken. Die Aufnahmen 24, 26 definieren jeweils einen halbzylindrisch ausgebildeten Aufnahmeraum 28, 30. Die Zylinderachsen 32, 34 der Aufnahmeräume 28, 30 verlaufen hier parallel zueinander und bezüglich Figur 2 senkrecht zur Zeichenebene. An der Grundplatte 22 ist eine Aussparung 35 vorgesehen, in die ein Befestigungsmittel oder beispielsweise ein Montagewerkzeug eingreifen kann.

Der Aufbau der Aufnahmen 24, 26 wird im Folgenden anhand der ersten Aufnahme 24 erläutert. Die erste Aufnahme 24 hat, wie insbesondere in Figur 2 zu sehen ist, jeweils erste Rastelemente 36 sowie zweite Rastelemente 38, die sich auf einer Seite der Grundplatte 22 von dieser weg erstrecken. Die ersten Rastelemente 36 sowie die zweiten Rastelemente 38 sind bezüglich der Zylinderachse 32 paarweise gegenüberliegend angeordnet und in Richtung der Zylinderachse 32 hintereinander angeordnet. Als erste Rastelemente 36 werden hier jeweils die bezüglich Figur 2 im Vordergrund liegenden Rastelemente bezeichnet, während die zweiten Rastelemente 38 die in Richtung der Zylinderachse 32 hinter den ersten Rastelemente 36 liegenden Rastelemente sind.

Bezüglich einer Ebene E, die senkrecht auf der Zylinderachse 32 steht und die in Figur 3 angedeutet ist, sind die ersten Rastelemente 36 auf einer Seite der Ebene, die zweiten Rastelemente 38 liegen auf der zweiten Seite der Ebene. Diese Ebene bildet also gewissermaßen eine ,Trennebene', die das Bauteil in einen bezüglich Figur 2 vorderen Teil und einen hinteren Teil, der in Richtung der Zylinderachse hinter dem vorderen Teil ist, teilt. Die ersten Rastelemente 36 sind hier vollständig auf dem vorderen Teil des Bauteils 20 angeordnet und die zweiten Rastelemente 38 auf dem hinteren Teil.

Die Rastvorsprünge 42 der ersten Rastelemente 36 sind hier vom Aufnahmeraum 28 weg gerichtet und die Rastvorsprünge 44 der zweiten Rastelemente 38 weisen zum Aufnahmeraum 28 hin. Wie insbesondere in Figur 2 zu sehen ist, haben die Rastflächen 48 der ersten Rastelemente 36 und die Rastflächen 50 der zweiten Rastelemente 38 den gleichen Abstand L von einer Symmetrieebene 52, die durch die Zylinderachse 32 des Aufnahmeraums 28 verläuft.

Das heißt die ersten Rastelemente 36 sind so ausgebildet, dass diese mit den zweiten Rastelementen 38 eines zweiten Bauteils 20' verrasten können, wie im folgenden dargestellt ist.

Auf der Innenseite des Aufnahmeraums 28 sind des Weiteren eine Kontaktfläche 45 sowie mehrere Rippen 46 vorgesehen, die in Richtung der Zylinderachse 32 verlaufen.

Analog zur ersten Aufnahme 24 weist die zweite Aufnahme 26 erste Rastelemente 54 und zweite Rastelemente 56 mit Rastvorsprüngen 58 bzw. 60 und Rastflächen 62 bzw. 64 auf. Auf der Innenseite der Aufnahme 26 sind eine Kontaktfläche 66 sowie mehrere Rippen 68 angeordnet. Im Gegensatz zur ersten Aufnahme 26 sind hier die Rastvorsprünge 58 der ersten Rastelemente 54 nach innen, also zum Aufnahmeraum 30 hin gerichtet und die Rastvorsprünge 60 der zweiten Rastelemente 56 nach außen vom Aufnahmeraum 30 weg. Die Ausrichtung der Rastvorsprünge 58, 60 könnte aber auch symmetrisch zur ersten Aufnahme 24 erfolgen.

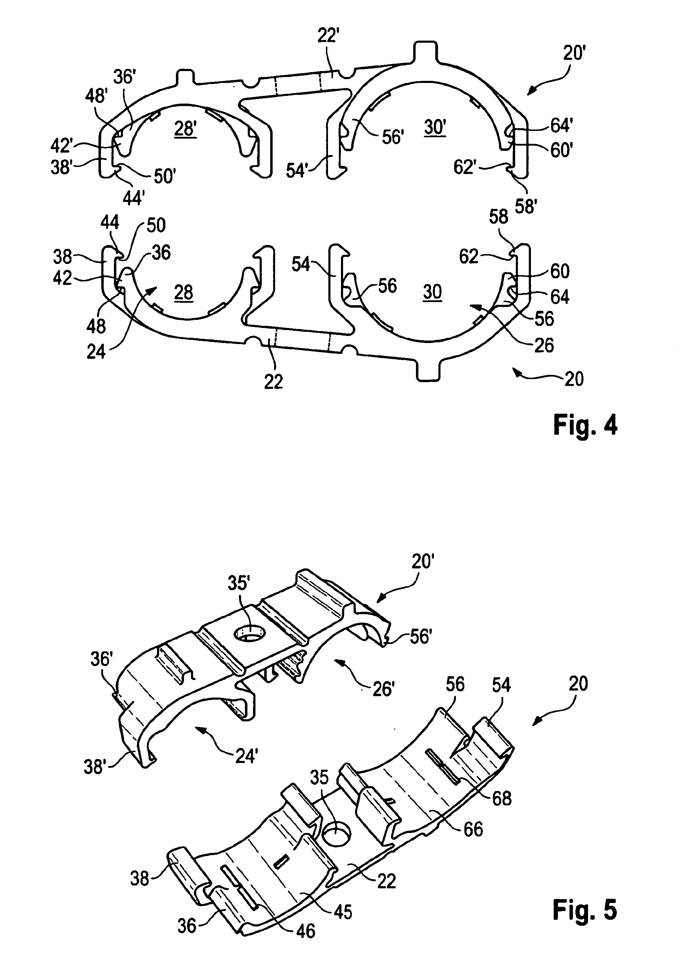

Wie in Figur 4 zu sehen ist, kann der Befestigungsclip 10 aus zwei identischen Bauteilen 20, 20' zusammengesetzt werden. Eines der Bauteile 20' ist hier um eine senkrecht auf der Symmetrieebene 52 stehende Achse um 180° gedreht und so ausgerichtet, dass die ,Trennebenen' der Bauteile 20, 20' deckungsgleich sind. Die zweiten Rastelemente 38', 56' sind hier im Vordergrund, und die ersten Rastelemente 36', 54' liegen dahinter. In diesem Fall sind die ersten Rastelemente 36, 54 des Bauteils 20 gegen die zweiten Rastelemente 38', 56' des Bauteils 20' ausgerichtet, bzw. die zweiten Rastelemente 38, 56 des Bauteils 20 gegen die ersten Rastelemente 36', 54' des Bauteils 20'.

Das Bauteil 20' kann in eine Montagerichtung R bezüglich Figur 4 von oben auf das Bauteil 20 aufgeschoben werden. Da die Rastflächen 48, 48', 50, 50' der Rastelemente 36, 36', 38, 38'den gleichen Abstand zueinander aufweisen, können die zweiten Rastelemente 38' an den ersten Rastelementen 36 des Bauteils 20 verrasten und die zweiten Rastelemente 38 mit den ersten Rastelementen 36' des Bauteils 20'.

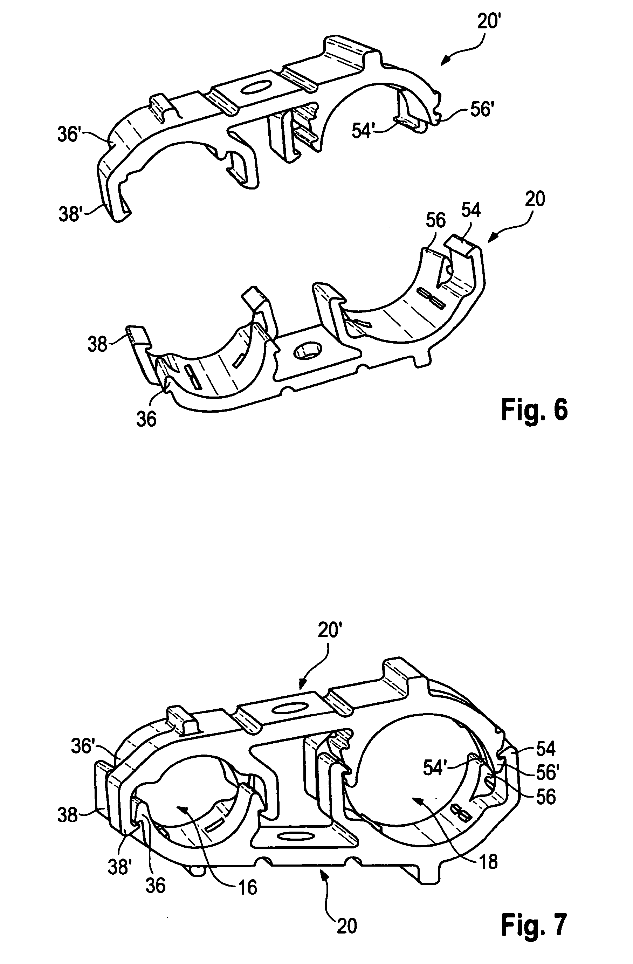

Die Rastelemente 54, 56 der zweiten Aufnahme 26 können analog dazu mit den Rastelementen 54', 56' der zweiten Aufnahme 26' verrasten. Die jeweils halbzylindrischen Aufnahmeräume 24, 24' und 26, 26' bilden in zusammengesetztem Zustand die zylindrischen Aufnahmeräume 16, 18 des Befestigungsclips 10 (Figur 7). Der erfindungsgemäße Befestigungsclip 10 kann also aus zwei identischen Bauteilen 20, 20' zusammengesetzt werden.

Wie in Figur 3 zu sehen ist, liegen die ersten Rastelemente 36, 54 in Richtung der Zylinderachse 32, 34 direkt aneinander an, grenzen also direkt an die 'Trennebene' an. In montiertem Zustand liegen die zweiten Rastelemente 38, 38' sowie 56, 56' und die ersten Rastelemente 36, 36' bzw. 54, 54' in Richtung der Zylinderachsen 32, 34 aneinander an (Figur 7). Ein Verschieben des oberen Bauteils 20' nach hinten, also in die Zeichenebene hinein, ist durch die aneinander anliegenden zweiten Rastelemente 38, 38' der ersten Aufnahmen 24, 24' und die ersten Rastelemente 54, 54' der zweiten Aufnahmen 26, 26' verhindert. Eine Bewegung des oberen Bauteils 20' nach vorne, aus der Zeichenebene hinaus, ist analog dazu durch die ersten Rastelemente 36, 36' der ersten Aufnahmen 24, 24' bzw. die zweiten Rastelemente 56, 56' der zweiten Aufnahmen 26, 26' verhindert.

Ein versehentliches Lösen der Bauteile 20, 20' durch ein Verschieben der Bauteile 20, 20' in Richtung der Zylinderachsen 32, 34, beispielsweise durch Zug auf einer der Leitungen 12, 14, ist so sicher ausgeschlossen.

Die Rastelemente 36, 36', 38, 38', 54, 54', 56, 56' können aber auch teilweise beabstandet von der ,Trennebene' angeordnet sein, so dass die Bauteile 20, 20' in Richtung der Zylinderachsen 32, 34 ,Spiel' haben, wodurch die Montage der Bauteile 20, 20' erleichtert ist.

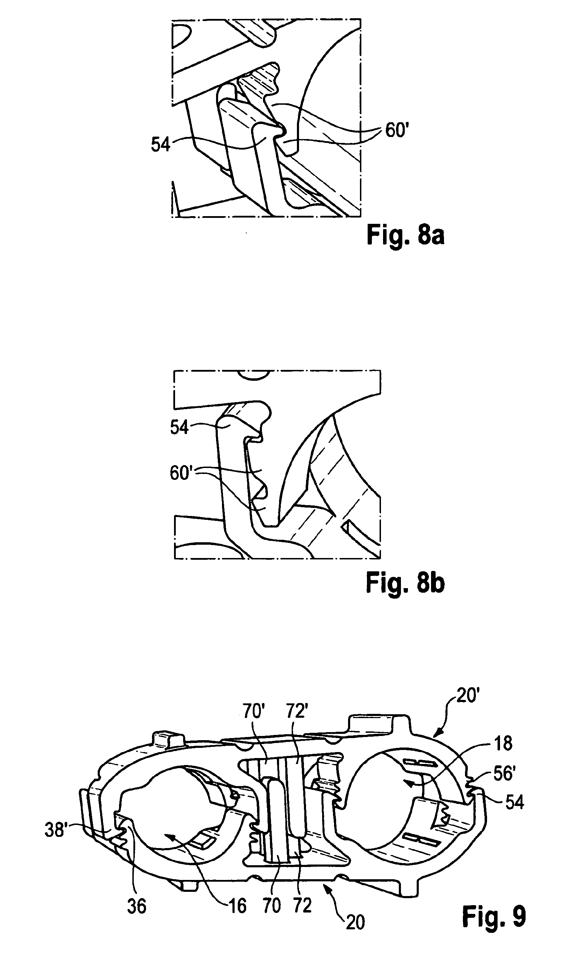

Wie in Figur 7 und insbesondere in den Detailansichten in den Figuren 8a und b zu sehen ist, weist die zweite Aufnahme 26 an den zweiten Rastelementen 56 jeweils zwei Rastvorsprünge 60 auf. Die Rastvorsprünge 62' des ersten Rastelements 54' können wahlweise in einem der beiden Rastvorsprünge 60 einrasten, wodurch der Durchmesser bzw. die Größe der Aufnahmeraum 18 variiert werden kann. Der Befestigungsclip 10 kann so für verschiedene Leitungsdurchmesser verwendet werden. Zudem kann so bei entsprechendem Abstand der Rastvorsprünge 60 die Leitung 14 im Aufnahmeraum 18 geklemmt werden, so dass diese zugfest im Befestigungsclip 10 gehalten ist. Die Leitungen 12, 14 liegen in diesem Fall an den Kontaktflächen 45, 45', 66, 66' oder aber an den Rippen 46, 46', 68, 68' an und werden durch diese gehalten.

Die halbzylindrischen Aufnahmeräume 28, 28', 30, 30' der Bauteile 20, 20' sind also entweder durch die auf der Innenseite der Aufnahmen 24, 24', 26, 26' vorgesehenen Kontaktflächen 45, 45', 66, 66' oder durch die auf der Innenseite der Aufnahmen 24, 24', 26, 26' vorgesehenen Rippen 46, 46', 68, 68' begrenzt. Es ist auch denkbar, das die Rippen 46, 46', 68, 68' so angeordnet sind, dass eine Leitung 12, 14 mit dünnerem Durchmesser zwischen den Rippen 46, 46', 68, 68' an den Kontaktflächen 45, 45', 66, 66' anliegen kann, während eine Leitungen mit größerem Durchmesser ausschließlich an den Rippen 46, 46', 68, 68' anliegt.

Selbstverständlich ist es denkbar, dass die anderen Rastelemente 36, 38, 58 ebenfalls zwei Rastvorsprünge aufweisen. Insbesondere ist die Anzahl der Rastvorsprünge variabel, sodass eine individuelle Anpassung an verschiedene Leitungsdurchmesser möglich ist.

Da die Rastelemente 58, 54, 36, 38 direkt an die Mittelebene angrenzen, liegen die Rastelemente 38, 38' bzw. 36, 36' in montiertem Zustand direkt aneinander an, wodurch diese in Richtung der Zylinderachse spielfrei gehalten sind. Abweichend davon können die Rastelemente aber auch weiter von der ,Trennebene' entfernt sein. In einem solchen Fall ist es denkbar, dass am Rastelement 20 zusätzliche Zentriervorsprünge 70, 72 ausgebildet sind, wie dies in der Ausführungsform in Figur 9 dargestellt ist.

Der Aufbau der Bauteile 20, 20' entspricht hier im Wesentlichen dem des vorher gezeigten Ausführungsbeispiels. Zwischen den Aufnahmen 26, 24 sind hier zusätzlich an jedem Bauteil zwei Zentriervorsprünge 70, 72 vorgesehen, die sich jeweils von der Grundplatte 22, 22' weg in Richtung des gegenüberliegenden Bauteils 20, 20' erstrecken. Die Zentriervorsprünge 70, 72 sind also auf der Seite der Grundplatte 22 vorgesehen, auf der die Rastelemente 36, 38, 54, 56 vorgesehen sind.

Analog zu den Rastelementen sind die Vorsprünge 70, 72 jeweils auf einer Seite der ,Trennebene' vorgesehen, wobei der erste Vorsprung 70 auf der ersten Seite der Ebene vorgesehen ist und der zweite Vorsprung 72 auf der zweiten Seite der Ebene. Bezüglich der Zylinderachse 32, 34 sind die Zentriervorsprünge 70, 72 nebeneinander angeordnet, wobei sich die Zentriervorsprünge 70, 72 in Richtung der Zylinderachse 32, 34 nicht überlappen.

Die Zentriervorsprünge 70, 72 stehen dabei so weit in Richtung zum jeweils anderen Bauteil 20, 20' vor, dass diese als Einführhilfe beim Zusammensetzen der Bauteile 20, 20' dienen. In montiertem Zustand liegen diese zudem in Richtung der Zylinderachse 32, 34 aneinander an bzw. überlappen einander in Richtung der Zylinderachse 32, 34, so dass diese ein Verschieben der Bauteile 20, 20' in Richtung der Zylinderachsen 32, 34 verhindern.

Die Aufnahmeräume 16, 18 haben hier unterschiedliche Durchmesser zur Aufnahme unterschiedlich dicker Leitungen 12, 14. Die Aufnahmeräume 16, 18 können aber auch den gleichen Durchmesser aufweisen. Abweichend von den hier dargestellten Ausführungsformen mit jeweils zwei Aufnahmeräumen 16, 18 sind auch andere Ausführungsformen, beispielsweise mit nur einem Aufnahmeraum 16 oder auch mit mehreren Aufnahmeräumen denkbar.

Die Bauteile 20, 20' sind hier jeweils einstückig aus Kunststoff spritzgegossen, es sind aber auch andere Materialien und Herstellungsverfahren denkbar.

## Patentansprüche

1. Bauteil (20) für einen Befestigungsclip (10), der aus zwei identischen solcher Bauteile (20, 20') zusammengesetzt ist und zur Befestigung von zumindest einer Leitung (12, 14) dient, mit einer Grundplatte (22) und mit zumindest einer Aufnahme (24, 26) für eine Leitung (12, 14), wobei die Aufnahme (24, 26) einen im Wesentlichen halbzylindrischen Aufnahmeraum (28, 30) definiert,
wobei die Aufnahme (24, 26) bezüglich der Zylinderachse (32, 34) paarweise gegenüberliegende erste Rastelemente (36, 54) und zweite Rastelemente (38, 56) aufweist, die sich auf einer Seite der Grundplatte (22) von dieser weg erstrecken,
wobei die ersten Rastelemente (36, 54) bezüglich einer senkrecht auf der Zylinderachse (32, 34) stehenden Ebene (40) auf einer ersten Seite der Ebene (40) und die zweiten Rastelemente (38, 56) auf der zweiten Seite der Ebene (40) angeordnet sind,
**dadurch gekennzeichnet, dass** die ersten Rastelemente (36, 54) so ausgebildet sind, dass sie an den zweiten Rastelementen (38, 56) eines zweiten identischen solchen Bauteils einrasten können.

2. Bauteil nach Anspruch 1, **dadurch gekennzeichnet, dass** die ersten Rastelemente (36, 54) und die zweiten Rastelemente (38, 56) jeweils direkt an die Ebene (40) angrenzen.

3. Bauteil nach Anspruch 1 oder 2, **dadurch gekennzeichnet, dass** die ersten Rastelemente (36, 54) und/oder die zweiten Rastelemente (38, 56) mehrere Rastvorsprünge (42, 44, 58, 60) aufweisen, die in verschiedenen Abständen zur Grundplatte (22) an den Rastelementen (36, 38, 54, 56) angeordnet sind.

4. Bauteil nach einem der vorhergehenden Ansprüche, **dadurch gekennzeichnet, dass** das Bauteil (20) zumindest einen Zentriervorsprung (70, 72) aufweist, der sich auf der Seite der Rastelemente (36, 38, 54, 56) von der Grundplatte (22) weg erstreckt und der bezüglich der Ebene (40) auf nur einer Seite der Ebene (40) angeordnet ist.

5. Bauteil nach einem der vorhergehenden Ansprüche, **dadurch gekennzeichnet, dass** an der Grundplatte (22) zumindest zwei Zentriervorsprünge (70, 72) vorgesehen sind, die sich auf der Seite der Rastelemente (36, 38, 54, 56) von der Grundplatte (22) weg erstrecken, und die bezüglich der Zylinderachse (32, 34) nebeneinander am Grundkörper (22) angeordnet sind, wobei der erste Zentriervorsprung (70) auf der ersten Seite der Ebene (40) und der zweite Zentriervorsprung (72) auf der zweiten Seite der Ebene (40) angeordnet ist.

6. Bauteil nach Anspruch 4 oder 5, **dadurch gekennzeichnet, dass** die Zentriervorsprünge (70, 72) direkt an die Mittelebene angrenzen.

7. Bauteil nach einem der vorhergehenden Ansprüche, **dadurch gekennzeichnet, dass** die Aufnahme (24, 26) eine den Aufnahmeraum (28, 30) begrenzende Kontaktfläche (45, 66) aufweist, die konkav ausgebildet ist und insbesondere einen kreissegmentförmigen Querschnitt aufweist.

8. Bauteil nach einem der vorhergehenden Ansprüche, **dadurch gekennzeichnet, dass** die Aufnahme (24, 26) zum Aufnahmeraum (28, 30) definierende Rippen (46, 68) aufweist, die insbesondere in Richtung der Zylinderachse (32, 34) verlaufen.

9. Bauteil nach einem der vorhergehenden Ansprüche, **dadurch gekennzeichnet, dass** das Bauteil (20) zumindest zwei Aufnahmen (24, 26) für jeweils eine Leitung (12, 14) aufweist, wobei sich die Aufnahmen (24, 26) auf der gleichen Seite von der Grundplatte (22) weg erstrecken.

10. Bauteil nach Anspruch 9, **dadurch gekennzeichnet, dass** die Aufnahmeräume (28, 30) der Aufnahmen (24, 26) unterschiedliche Durchmesser aufweisen.

11. Bauteil nach einem der vorhergehenden Ansprüche, **dadurch gekennzeichnet, dass** die ersten Rastelemente (36, 54) vom Aufnahmeraum (28, 30) weg gerichtete Rastvorsprünge (42, 58) aufweisen und die zweiten Rastelemente (38, 56) in Richtung zum Aufnahmeraum (28, 30) gerichtete Rastvorsprünge (44, 60) aufweisen.

12. Bauteil nach einem der vorhergehenden Ansprüche, **dadurch gekennzeichnet, dass** das Bauteil (20) eine Aussparung zur Befestigung des Bauteils (20) und/oder zur Aufnahme eines Werkzeugs aufweist.

13. Bauteil nach einem der vorhergehenden Ansprüche, **dadurch gekennzeichnet, dass** das Bauteil (20) einstückig aus Kunststoff spritzgegossen ist.

14. Befestigungsclip (10) zur Befestigung von zumindest einer Leitung (12, 14) mit einem im Wesentlichen zylindrischen Aufnahmeraum (16, 18), **dadurch gekennzeichnet,**
**dass** der Befestigungsclip (10) zwei Bauteile (20, 20') nach einem der vorhergehenden Ansprüche aufweist,
wobei der Aufnahmeraum (16, 18) durch die Aufnahmen (24, 24', 26, 26') der Bauteile (20, 20') gebildet ist, und
die ersten Rastelemente (36, 54) des ersten Bauteils (20) mit den zweiten Rastelementen (38', 56') des zweiten Bauteils (20') und die zweiten Rastelemente (38, 56) des ersten Bauteils (20) mit den ersten Rastelementen (36', 54') des zweiten Bauteils (20') zusammenwirken können.

15. Befestigungsclip nach Anspruch 14, **dadurch gekennzeichnet, dass** die Aufnahmeräume (16, 18) der Aufnahmen unterschiedliche Durchmesser aufweisen.

16. Befestigungsclip nach Anspruch 14 oder 15, **dadurch gekennzeichnet, dass** die ersten Rastelemente (36, 36', 54, 54') und/oder die zweiten Rastelemente (38, 38', 56, 56') mehrere Rastvorsprünge aufweisen, die mit verschiedenen Abständen zur Grundplatte (22, 22') an den Rastelementen angeordnet sind.

## Claims

1. A component (20) for a fastening clip (10) which is composed of two identical components (20, 20') of this type and serves to fasten at least one conduit (12, 14), having a base plate (22) and at least one seat (24, 26) for a conduit (12, 14), the seat (24, 26) defining a substantially semi-cylindrical receiving space (28, 30),
the seat (24, 26) having first latching elements (36, 54) and second latching elements (38, 56) arranged opposite each other in pairs with respect to the cylinder axis (32, 34) and extending on one side of the base plate (22) away therefrom,
the first latching elements (36, 54) being arranged on a first side of a plane (40) which is perpendicular to the cylinder axis (32, 34), and the second latching elements (38, 56) being arranged on the second side of the plane (40),
**characterized in that** the first latching elements (36, 54) are formed such that they can latch on the second latching elements (38, 56) of a second, identical, component of this type.

2. The component according to claim 1, **characterized in that** the first latching elements (36, 54) and the second latching elements (38, 56) each directly adjoin the plane (40).

3. The component according to claim 1 or 2, **characterized in that** the first latching elements (36, 54) and/or the second latching elements (38, 56) have a plurality of latching projections (42, 44, 58, 60) which are arranged on the latching elements (36, 38, 54, 56) at different distances from the base plate (22).

4. The component according to any of the preceding claims, **characterized in that** the component (20) has at least one centering projection (70, 72) which extends away from the base plate (22) on the side of the latching elements (36, 38, 54, 56) and which, with respect to the plane (40), is arranged on only one side of the plane (40).

5. The component according to any of the preceding claims, **characterized in that** the base plate (22) is provided with at least two centering projections (70, 72) which extend away from the base plate (22) on the side of the latching elements (36, 38, 54, 56) and which are arranged side by side on the base plate (22) with respect to the cylinder axis (32, 34), the first centering projection (70) being arranged on the first side of the plane (40) and the second centering projection (72) being arranged on the second side of the plane (40).

6. The component according to claim 4 or 5, **characterized in that** the centering projections (70, 72) directly adjoin the center plane.

7. The component according to any of the preceding claims, **characterized in that** the seat (24, 26) has a contact surface (45, 66) which delimits the receiving space (28, 30), is configured in a concave manner and has in particular a cross-section having the shape of a segment of a circle.

8. The component according to any of the preceding claims, **characterized in that** the seat (24, 26) includes ribs (46, 68) directed towards the receiving space (28, 30), which in particular extend in the direction of the cylinder axis (32, 34).

9. The component according to any of the preceding claims, **characterized in that** the component (20) has at least two seats (24, 26) for one respective conduit (12, 14), the seats (24, 26) extending on the same side away from the base plate (22).

10. The component according to claim 9, **characterized in that** the receiving spaces (28, 30) of the seats (24, 26) have different diameters.

11. The component according to any of the preceding claims, **characterized in that** the first latching elements (36, 54) include latching projections (42, 58) facing away from the receiving space (28, 30), and **in that** the second latching elements (38, 56) include latching projections (44, 60) directed towards the receiving space (28, 30).

12. The component according to any of the preceding claims, **characterized in that** the component (20) has a recess for fastening the component (20) and/or for receiving a tool.

13. The component according to any of the preceding claims, **characterized in that** the component (20) is injection-molded in one piece of plastic material.

14. A fastening clip (10) for fastening at least one conduit (12, 14), having a substantially cylindrical receiving space (16, 18), **characterized in that**
the fastening clip (10) includes two components (20, 20') according to any of the preceding claims,
the receiving space (16, 18) being formed by the seats (24, 24', 26, 26') of the components (20, 20'), and
the first latching elements (36, 54) of the first component (20) being adapted to cooperate with the second latching elements (38', 56') of the second component (20'), and the second latching elements (38, 56) of the first component (20) being adapted to cooperate with the first latching elements (36', 54') of the second component (20').

15. The fastening clip according to claim 14, **characterized in that** the receiving spaces (16, 18) of the seats have different diameters.

16. The fastening clip according to claim 14 or 15, **characterized in that** the first latching elements (36, 36', 54, 54') and/or the second latching elements (38, 38', 56, 56') have a plurality of latching projections which are arranged on the latching elements at different distances from the base plate (22, 22').

## Revendications

1. Composant (20) pour un clip de fixation (10) qui est composé de deux composants (20, 20') identiques de ce type et qui sert à la fixation d'au moins un conduit (12, 14), présentant une plaque de base (22) et au moins un logement (24, 26) pour un conduit (12, 14), le logement (24, 26) définissant un espace de logement (28, 30) sensiblement semi-cylindrique,
le logement (24, 26) présentant des premiers éléments d'enclenchement (36, 54) et des deuxièmes éléments d'enclenchement (38, 56) qui sont opposés par paires par rapport à l'axe de cylindre (32, 34) et qui s'étendent d'un côté de la plaque de base (22) en éloignement de celle-ci,
les premiers éléments d'enclenchement (36, 54) étant agencés par rapport à un plan (40) perpendiculaire à l'axe de cylindre (32, 34) d'un côté du plan (40), et les deuxièmes éléments d'enclenchement (38, 56) étant agencés du deuxième côté du plan (40),
**caractérisé en ce que** les premiers éléments d'enclenchement (36, 54) sont réalisés de manière à pouvoir s'enclencher sur les deuxièmes éléments d'enclenchement (38, 56) d'un deuxième composant identique de ce type.

2. Composant selon la revendication 1, **caractérisé en ce que** les premiers éléments d'enclenchement (36, 54) et les deuxièmes éléments d'enclenchement (38, 56) sont respectivement directement adjacents au plan (40).

3. Composant selon la revendication 1 ou 2, **caractérisé en ce que** les premiers éléments d'enclenchement (36, 54) et/ou les deuxièmes éléments d'enclenchement (38, 56) présentent plusieurs saillies d'enclenchement (42, 44, 58, 60) qui sont agencées sur les éléments d'enclenchement (36, 38, 54, 56) à différentes distances de la plaque de base (22).

4. Composant selon l'une des revendications précédentes, **caractérisé en ce que** le composant (20) présente au moins une saillie de centrage (70, 72) qui s'étend du côté des éléments d'enclenchement (36, 38, 54, 56) en éloignement de la plaque de base (22) et qui est agencée d'un seul côté du plan (40) par rapport au plan (40).

5. Composant selon l'une des revendications précédentes, **caractérisé en ce qu'**au moins deux saillies de centrage (70, 72) sont prévues sur la plaque de base (22), qui s'étendent du côté des éléments d'enclenchement (36, 38, 54, 56) en éloignement de la plaque de base (22) et qui par rapport à l'axe de cylindre (32, 34) sont agencées l'une à côté de l'autre sur la plaque de base (22), la première saillie de centrage (70) étant agencée du premier côte du plan (40), et la deuxième saillie de centrage (72) étant agencée du deuxième côté du plan (40).

6. Composant selon la revendication 4 ou 5, **caractérisé en ce que** les saillies de centrage (70, 72) sont directement adjacentes au plan médian.

7. Composant selon l'une des revendications précédentes, **caractérisé en ce que** logement (24, 26) présente une surface de contact (45, 66) délimitant l'espace de logement (28, 30), qui est réalisée de manière concave et présente en particulier une section transversale en forme de segment de cercle.

8. Composant selon l'une des revendications précédentes, **caractérisé en ce que** le logement (24, 26) présente des nervures (46, 68) dirigées vers l'espace de logement (28, 30) qui s'étendent en particulier en direction de l'axe de cylindre (32, 34).

9. Composant selon l'une des revendications précédentes, **caractérisé en ce que** le composant (20) présente au moins deux logements (24, 26) pour un conduit (12, 14) respectif, les logements (24, 26) s'étendant du même côté en éloignement de la plaque de base (22).

10. Composant selon la revendication 9, **caractérisé en ce que** les espaces de logement (28, 30) des logements (24, 26) présentent différents diamètres.

11. Composant selon l'une des revendications précédentes, **caractérisé en ce que** les premiers éléments d'enclenchement (36, 54) présentent des saillies d'enclenchement (42, 58) dirigées en éloignement de l'espace de logement (28, 30), et **en ce que** les deuxièmes éléments d'enclenchement (38, 56) présentent des saillies d'enclenchement (44, 60) dirigées vers l'espace de logement (28, 30).

12. Composant selon l'une des revendications précédentes, **caractérisé en ce que** le composant (20) présente un évidement pour la fixation du composant (20) et/ou le logement d'un outil.

13. Composant selon l'une des revendications précédentes, **caractérisé en ce que** le composant (20) est moulé par injection en une seule pièce en matière plastique.

14. Clip de fixation (10) pour la fixation d'au moins un conduit (12, 14), comportant un espace de logement (16, 18) sensiblement cylindrique, **caractérisé en ce que**
le clip de fixation (10) présente deux composants (20, 20') selon l'une des revendications précédentes,
l'espace de logement (16, 18) étant formé par les logements (24, 24', 26, 26') des composants (20, 20'), et
**en ce que** les premiers éléments d'enclenchement (36, 54) du premier composant (20) sont aptes à coopérer avec les deuxièmes éléments d'enclenchement (38', 56') du deuxième composant (20'), et les deuxièmes éléments d'enclenchement (38, 56) du premier composant (20) sont aptes à coopérer avec les premiers éléments d'enclenchement (36', 54') du deuxième composant (20').

15. Clip de fixation selon la revendication 14, **caractérisé en ce que** les espaces de logement (16, 18) des logements présentent différents diamètres.

16. Clip de fixation selon la revendication 14 ou 15, **caractérisé en ce que** les premiers éléments d'enclenchement (36, 36', 54, 54') et/ou les deuxièmes éléments d'enclenchement (38, 38', 56, 56') présentent plusieurs saillies d'enclenchement qui sont agencées sur les éléments d'enclenchement à différentes distances de la plaque de base (22, 22').
